# EUROPÄISCHE PATENTSCHRIFT

(11) **EP 1 977 473 B1**
(45) Veröffentlichungstag und Bekanntmachung des Hinweises auf die Patenterteilung: **16.10.2013**
(21) Anmeldenummer: 06775904.3
(22) Anmeldetag: 23.08.2006
(51) Int. Cl.: H01M 10/50, H01M 2/10

(54) **BATTERIEHALTER**
BATTERY HOLDER
SUPPORT DE BATTERIE

(30) Priorität: 12.12.2005 DE 102005059615
(43) Veröffentlichungstag der Anmeldung: 08.10.2008
(73) Patentinhaber: TEMIC Automotive Electric Motors GmbH, 10553 Berlin (DE)
(72) Erfinder: GÜNER, Nevzat, 12107 Berlin (DE); WIETHOFF, Swen, 10829 Berlin (DE); WELKE, Knut, 14612 Falkensee (DE); GÜRTLER, Sönke, 14169 Berlin (DE); VILLARROEL, Rogelio, 12249 Berlin (DE); VOSS, Martin, 15566 Schöneiche (DE); KASSEN, Reinhard, 10625 Berlin (DE); GANGHOFNER, Reinhard, 90419 Nürnberg (DE); KELLER, Michael, 76534 Baden-Baden (DE); BIRKE, Peter, 16548 Glienicke/Nordbahn (DE); RUDORFF, Axel, 12623 Berlin (DE)
(74) Vertreter: Büchner, Jörg
(86) Internationale Anmeldenummer: PCT/DE2006/001486
(87) Internationale Veröffentlichungsnummer: WO 2007/068223

(56) Entgegenhaltungen:
- EP-A- 1 320 138
- EP-A2- 1 583 170
- WO-A2-03/103083
- DE-A1- 10 352 046
- US-A1- 2005 170 240

## Beschreibung

Die Erfindung betrifft einen Batteriehalter mit integrierter Kühlung, insbesondere zur Aufnahme von zylindrischen galvanischen Zellen, wie sie in Hybridfahrzeugen gebräuchlich sind.

Elektro- und Hybridfahrzeuge benötigen leistungsfähige Energiespeicher in Form galvanischer Zellen für den elektrischen Antrieb der Fahrzeuge. Hierfür haben sich Lithium-Ionen-Akkumulatoren etabliert, da in ihnen die Vorteile einer hohen Energiedichte und eines geringen Memory-Effekts verbunden sind. Aufgrund der hohen Temperaturen, die einerseits besonders im Motorraum von Fahrzeugen auftreten können und andererseits durch hohe Verlustleistungen infolge hoher Ströme beim Laden und Entladen der Akkumulatoren von diesen selbst erzeugt werden, macht sich eine aktive Kühlung der Akkumulatoren notwendig, da hohe Temperaturen deren Lebensdauer teils erheblich verkürzen können.

US 2005/0170240 A1 offenbart einen Batteriehalter für galvanische Zellen, wobei mehrere hintereinander geschichtet angeordnete Wärmetauschkanäle einen wabenstrukturartigen Kühlkörper mit Kühlkammern bilden. Aufgrund des konstruktiven Aufbaus mit mehreren, aufeinander montierten Kühleinheiten die in einer gekapselten Halterung angeordnet sind, ist eine Erweiterbarkeit des Batteriehalters um eine definierte Anzahl von Kühlkörpern nur sehr aufwändig realisierbar.

WO 03/103083 A2 zeigt eine Kühleinrichtung mit Kühlkörpern für elektrochemische Speicherzellen. Durch einen kraftschlüssigen Kontakt zwischen den Speicherzellen und den Kühlkörpern soll ein möglichst effizienter Kühlmechanismus für die Speicherzellen erreicht werden.

DE 103 52 046 A1 offenbart eine Kühleinrichtung für eine Batterie mit einer zylindrischen elektrochemischen Speicherzelle, wobei ein größter Teil einer zylindrischen Mantelfläche der Speicherzelle von einem einstückigen Aufnahmeelement umgeben ist. Dieses Aufnahmeelement weist in Längsrichtung verlaufende elastische Bereiche auf, die durch eine elastische Dehnung eine Erweiterung des Durchmessers des Aufnahmeelements erlauben.

Der Erfindung liegt daher die Aufgabe zugrunde, einen Batteriehalter mit integrierter, aktiver Kühlung sowie verbesserter Erweiterbarkeit anzugeben.

Die Aufgabe wird erfindungsgemäß gelöst durch einen Batteriehalter mit den Merkmalen des Anspruchs 1.

Vorteilhafte Ausgestaltungen der Erfindung sind Gegenstand der Unteransprüche.

Bei einem erfindungsgemäßen Batteriehalter für galvanische Zellen ist mindestens eine erste Wabenstruktur vorgesehen. Die Wabenstruktur umfasst einen unteren Grundkühlkörper und einen oberen Grundkühlkörper und mindestens einen Zwischenkühlkörper. Zwischen jeweils einem der Grundkühlkörper und einem der Zwischenkühlkörper und/oder zwischen zweien der Zwischenkühlkörper sind galvanische Zellen nebeneinander in einer Zellenebene angeordnet. Die galvanischen Zellen einer der Zellenebenen sind zu den galvanischen Zellen mindestens einer benachbarten Zellenebene um die halbe Breite einer galvanischen Zelle so seitlich verschoben, dass sich eine wabenartige Anordnung der galvanischen Zellen ergibt. Bei den bevorzugten zylinderförmigen galvanischen Zellen entspricht die halbe Breite einer galvanischen Zelle dem Radius der galvanischen Zelle. Bei prismatischen galvanischen Zellen hängt dieses Maß von der Ausrichtung des Prismas ab. Der Zwischenkühlkörper und die Grundkühlkörper sind in einem Bereich zwischen den galvanischen Zellen entsprechend den Außenkonturen der galvanischen Zellen gebildet, bilden also beispielsweise bei zylinderförmigen galvanischen Zellen zwischen zwei galvanischen Zellen einer Zellenebene und einer galvanischen Zelle einer benachbarten Zellenebene in diesem Bereich im Wesentlichen einen von drei konkaven Flächen begrenzten Körper, wobei der Radius der konkaven Flächen dem Radius der galvanischen Zellen entspricht, so dass sich im Interesse einer guten Wärmeleitung ein möglichst direkter Kontakt zwischen den galvanischen Zellen und den Kühlkörpern ergibt. Jeder der Kühlkörper weist zumindest an einem in einer Axialrichtung der galvanischen Zellen gelegenen Ende eine Kühlkammer auf, die von einem Kühlmedium durchströmbar ist. In die Kühlkammer ist das Kühlmedium zumindest aus einer Kühlkammer mindestens eines benachbarten Kühlkörpers einströmbar und/oder aus der Kühlkammer ist das Kühlmedium zumindest in eine Kühlkammer mindestens eines der benachbarten Kühlkörper ausströmbar. Mindestens eine Kühlkammer mindestens eines der Kühlkörper aus mindestens einer der Wabenstrukturen weist einen Kühlmittelzulauf und/oder einen Kühlmittelablauf zur Zuführung und/oder Abführung des Kühlmediums auf. Als Kühlmedium kommen insbesondere Flüssigkeiten wie R134A oder Wasser zum Einsatz. Mindestens zwei Wabenstrukturen sind so hintereinander angeordnet, dass jede der Kühlkammern mindestens einer der Wabenstrukturen an eine benachbarte Kühlkammer einer der anderen Wabenstrukturen angrenzt, wobei die Kühlkammern jeweils zweier in einer der Wabenstrukturen benachbarter Kühlkörper mit Verbindungsrohren verbindbar sind.

Die mit der Erfindung erzielten Vorteile bestehen insbesondere darin, dass ein solcher Batteriehalter modular erweiterbar, d.h. auf eine erforderliche Anzahl galvanischer Zellen anpassbar ist. Die galvanischen Zellen können auf einfache Weise ebenenweise eingebaut werden, beispielsweise indem eine erste Lage galvanischer Zellen in einer Zellebene auf dem unteren Grundkühlkörper angeordnet wird, darauf ein Zwischenkühlkörper und eine weitere Lage galvanischer Zellen, gegebenenfalls gefolgt von weiteren Zwischenkühlkörpern und Lagen von galvanischen Zellen bis zum oberen Grundkühlkörper. Der so gebildete Batteriehalter kann auf einfache Weise in radialer Richtung der galvanischen Zellen verspannt werden, beispielsweise mit einem Gurtband oder mit einer geeigneten Vergussmasse vergossen werden. In einem solchen Batteriehalter sind defekte galvanische Zellen leicht austauschbar. Vorteilhaft ist weiter die platzsparende wabenartige Anordnung der galvanischen Zellen. Durch die Anordnung der Kühlkammern an den Kühlkörpern ergibt sich ein direkter Wärmeübergang und somit eine besonders effiziente Kühlung. Zwischen einem Grundkühlkörper und einem Zwischenkühlkörper sind insbesondere mindestens zwei galvanische Zellen und zwischen zwei Zwischenkühlkörpern insbesondere mindestens drei galvanische Zellen anordenbar.

Insbesondere sind zwei Wabenstrukturen hintereinander angeordnet, wobei ihre Kühlkammern aneinander angrenzen. Das ist besonders dann vorteilhaft, wenn das Kühlmedium zwischen mindestens einer der Kühlkammern mindestens einer der Wabenstrukturen und der benachbarten Kühlkammer der benachbarten Wabenstruktur strömbar ist, so dass nur ein gemeinsamer Kühlmittelzulauf und ein gemeinsamer Kühlmittelablauf benötigt werden. Das wird beispielsweise dadurch erreicht, dass die Kühlkammern an einer Kontaktfläche zwischen den Wabenstruktur ren offen sind, so dass das Kühlmedium leicht zwischen den Kühlkammern beider Wabenstrukturen strömbar ist.

Vorzugsweise ist dabei jeweils eine der Kühlkammern einer Wabenstruktur mit der benachbarten Kühlkammer der benachbarten Wabenstruktur unlösbar und bezüglich des Kühlmediums dicht verbunden ist, beispielsweise mittels eines Fügeverfahrens wie Löten, Schweißen oder Kleben.

Die Kühlkörper können auf einfache Weise zusammengesteckt werden und sind dabei gegen Verrutschen in Axialrichtung der galvanischen Zellen gesichert. Zudem wird eine einfache Möglichkeit zum Strömen des Kühlmediums zwischen den in einer Wabenstruktur benachbarten Kühlkammern geschaffen.

Vorzugsweise ist mindestens eines der Verbindungsrohre zu jeder der von ihm verbundenen Kühlkammern hin mittels jeweils einer Dichtung abgedichtet. Alternativ kann das Verbindungsrohr auch mit einer der Kühlkammern fest verbunden und nur zu der in der Wabenstruktur benachbarten Kühlkammer hin mittels einer Dichtung abgedichtet sein.

Galvanische Zellen, insbesondere für Hochstromanwendungen, weisen meist an mindestens einem ihrer Enden eine Berstscheibe auf, die dem Entweichen von Gasen bei Überhitzung oder anderen Grenzbetriebszuständen ermöglichen, um eine Explosion der galvanischen Zellen zu vermeiden. Diese Gase müssen auf einem möglichst kurzen Weg aus dem Batteriehalter abgeführt werden, um ihre lokale Ansammlung und infolgedessen die Bildung zündfähiger Gemische zu verhindern. In einer bevorzugten Ausführungsform ist deshalb mindestens eines der Verbindungsrohre so gestaltet, dass sich ein vorgegebener Mindestabstand zwischen den Kühlkörpern der von ihm verbundenen Kühlkammern mit einem vorgegebenen Spalt zum Entweichen von Gasen ergibt. Das kann beispielsweise über die Länge der Verbindungsrohre erreicht werden. Alternativ kann an den Verbindungsrohren ein Bund vorgesehen sein, der in der Art eines Anschlags wirkt.

Vorzugsweise ist jede der Kühlkammern so gebildet, dass das Kühlmedium innerhalb mindestens einer der Wabenstrukturen in nur einem Kreislauf vom Kühlmittelzulauf zum Kühlmittelablauf strömbar ist. Auf diese Weise ist sichergestellt, dass alle Kühlkörper gleichmäßig vom Kühlmedium durchströmt und gekühlt werden. Anderenfalls durchströmt das Kühlmedium besonders einen Strömungspfad mit dem geringsten Druckabfall infolge Reibung, Strömungsquerschnitten, Länge des Pfades etc., so dass die Kühlkammern und damit die Kühlkörper und die davon gekühlten galvanischen Zellen im Bereich anderer Strömungspfade weniger gekühlt werden.

In einer bevorzugten Ausführungsform sind die Kühlkörper aus Aluminium gebildet. Aluminium weist eine besonders gute Wärmeleitfähigkeit auf, ist leicht und korrosionsbeständig.

Um ein Herausrutschen der galvanischen Zellen in Axialrichtung aus dem Batteriehalter zu vermeiden, sind die Kühlkörper an einem der Kühlkammer gegenüberliegenden Ende vorzugsweise mit einer Anschlagkante versehen.

Ausführungsbeispiele der Erfindung werden anhand einer Zeichnung näher erläutert. Darin zeigen:
- Fig. 1: einen Batteriehalter zur Aufnahme von 34 zylindrischen galvanischen Zellen,
- Fig. 2: zwei an ihren Kühlkammern verbundene Grundkühlkör- , per und
- Fig. 3: zwei an ihren Kühlkammern verbundene Zwischenkühlkörper.

Einander entsprechende Teile sind in allen Figuren mit den gleichen Bezugszeichen versehen.

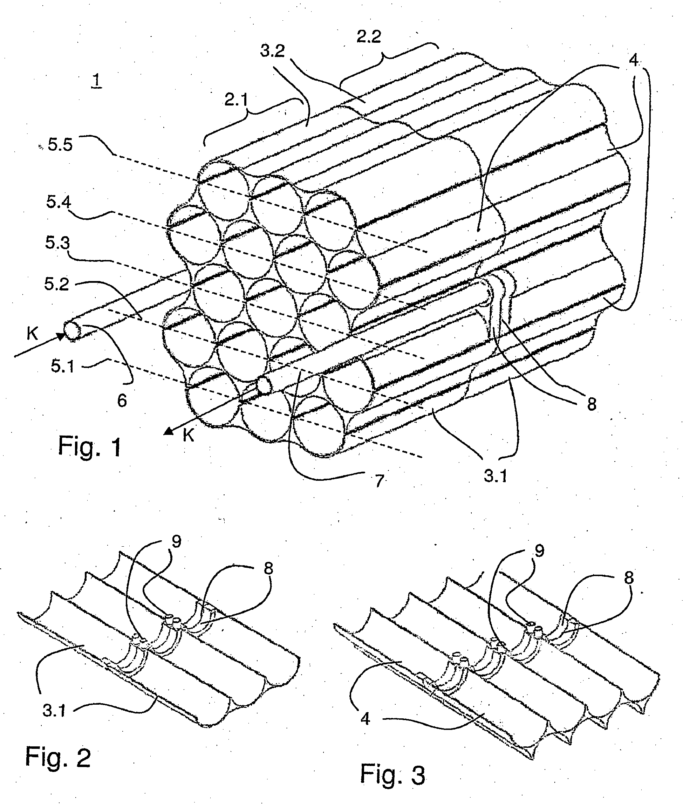

Figur 1 zeigt einen Batteriehalter 1 zur Aufnahme von 34 zylindrischen'galvanischen Zellen (nicht gezeigt). Der Batteriehalter ist aus zwei hintereinander angeordneten Wabenstrukturen 2.1, 2.2 gebildet. Jede der Wabenstrukturen 2.1, 2.2 weist einen unteren Grundkühlkörper 3.1 und einen oberen Grundkühlkörper 3.2 sowie dazwischen angeordnet vier Zwischenkühlkörper 4 auf. Alle Kühlkörper 3.1, 3.2, 4 sind aus Aluminium gebildet. Zwischen jedem der Grundkühlkörper 3.1, 3.2 und dem jeweils benachbarten Zwischenkühlkörper 4 sind jeweils drei galvanische Zellen in einer Zellenebene 5.1, 5.5 anordenbar. Zwischen diesem und dem jeweils nächsten Zwischenkühlkörper 4 sind vier galvanische Zellen in je einer weiteren Zellenebene 5.2, 5.4 anordenbar. Zwischen den beiden mittleren Zwischenkühlkörpern 4 sind wieder drei galvanische Zellen in einer Zellenebene 5.3 anordenbar. Die galvanischen Zellen der Zellenebenen 5.n*2 sind zu den galvanischen Zellen jeder benachbarten Zellenebene 5.n*2-1 um die halbe Breite einer galvanischen Zelle, also deren Radius so seitlich verschoben, dass sich eine wabenartige Anordnung der galvanischen Zellen ergibt. Die Zwischenkühlkörper 4 und die Grundkühlkörper 3.1, 3.2 sind in einem Bereich zwischen den galvanischen Zellen entsprechend den Außenkonturen der galvanischen Zellen gebildet, bilden also in diesem Bereich im Wesentlichen einen von drei konkaven Flächen begrenzten Körper, wobei der Radius der konkaven Flächen dem Radius der galvanischen Zellen entspricht. Die beiden Wabenstrukturen 2.1, 2.2 grenzen aneinander an. Jeder der Kühlkörper 3.1, 3.2, 4 jeder der Wabenstrukturen 2.1, 2.2 weist an einem Ende, an der er an einen Kühlkörper 3.1, 3.2, 4 der jeweils anderen Wabenstruktur 2.2, 2.1 angrenzt eine Kühlkammer 8 auf, die in den Figuren 2 und 3 deutlicher gezeigt wird. Die Kühlkammern 8 sind von einem Kühlmedium K durchströmbar, das einer der Kühlkammern 8 durch einen Kühlmittelzulauf 6 zugeführt und über einen Kühlmittelablauf 7 aus der gleichen oder einer anderen Kühlkammer 8 wieder abgeführt wird. Als Kühlmedium K kommt beispielsweise Wasser oder R134A in Frage. Andere Kühlmedien K sind ebenso möglich.

Figur 2 zeigt zwei an ihren Kühlkammern 8 miteinander verbundene untere Grundkühlkörper 3.1 zweier Wabenstrukturen 2.1, 2.2. Die Kühlkammer 8 eines der Grundkühlkörper 3.1 ist zu der Kühlkammer 8 des jeweils anderen Grundkühlkörpers 3.1 offen ausgeführt, so dass das Kühlmedium K dazwischen frei strömen kann. Die Kühlkammern 8 sind mittels eines Fügeverfahrens wie Löten, Schweißen oder Kleben unlösbar und bezüglich des Kühlmediums K dicht miteinander verbunden. Die Kühlkammern 8 weisen an ihrer einer innerhalb der jeweiligen Wabenstruktur 2.1, 2.2 benachbarten Kühlkammer 8 eines Zwischenkühlkörpers 4 (nicht gezeigt) zugewandten Seite Verbindungsrohre 9 auf, durch die das Kühlmedium K in diese benachbarte Kühlkammer 8 oder aus dieser strömbar ist. Jedes der Verbindungsrohre 9 ist zu jeder der von ihm verbundenen Kühlkammern 8 hin mittels jeweils einer Dichtung (nicht gezeigt) abgedichtet.

Figur 2 ist sinngemäß auch auf die oberen Grundkühlkörper 3.2 anwendbar.

Figur 3 zeigt zwei an ihren Kühlkammern 8 miteinander verbundene Zwischenkühlkörper 4 zweier Wabenstrukturen 2.1, 2.2. Die Kühlkammer 8 eines der Zwischenkühlkörper ist zu der Kühlkammer 8 des jeweils anderen Zwischenkühlkörpers 4 offen ausgeführt, so dass das Kühlmedium K dazwischen frei strömen kann. Die Kühlkammern 8 sind mittels eines Fügeverfahrens wie Löten, Schweißen oder Kleben unlösbar und bezüglich des Kühlmediums K dicht miteinander verbunden. Die Kühlkammern 8 weisen an ihren jeweils einer innerhalb der jeweiligen Wabenstruktur 2.1, 2.2 benachbarten Kühlkammer 8 eines anderen Kühlkörpers 3.1, 3.2; 4 (nicht gezeigt) zugewandten Seiten Verbindungsrohre 9 auf, durch die das Kühlmedium K in diese benachbarten Kühlkammern 8 oder aus diesen strömbar ist. Jedes der Verbindungsrohre 9 ist zu jeder der von ihm verbundenen Kühlkammern 8 hin mittels jeweils einer Dichtung (nicht gezeigt) abgedichtet.

Die Verbindungsrohre 9 können so gestaltet sein, dass sich ein vorgegebener Mindestabstand zwischen den Kühlkörper 3.1, 3.2, 4 der von ihm verbundenen Kühlkammern 8 mit einem vorgegebenen Spalt zum Entweichen von Gasen ergibt. Das kann beispielsweise über die Länge der Verbindungsrohre erreicht werden. Alternativ kann an den Verbindungsrohren ein Bund vorgesehen sein, der in der Art eines Anschlags wirkt.

Jede der Kühlkammern 8 kann so gebildet sein, dass das Kühlmedium K innerhalb mindestens einer der Wabenstrukturen 2.1, 2.2 in nur einem Kreislauf vom Kühlmittelzulauf 6 zum Kühlmittelablauf 7 strömbar ist.

Es kann eine andere Anzahl hintereinander und/oder nebeneinander angeordneter Wabenstrukturen 2.1 bis 2.n vorgesehen sein.

Die Grundkühlkörper 3.1, 3.2 und/oder die Zwischenkühlkörper 4 können so gebildet sein, dass eine andere Anzahl von galvanischen Zellen zwischen den Kühlkörpern 3.1, 3.2, 4 aufnehmbar ist.

Die Anzahl der Zwischenkühlkörper 4 kann anders gewählt sein.

Es können beide Enden der Kühlkörper 3.1, 3.2, 4 mit Kühlkammern 8 versehen sein.

Es können jeweils mehr als ein Kühlmittelzulauf und Kühlmittelablauf, insbesondere an den Kühlkammern 8 verschiedener Kühlkörper 3.1, 3.2, 4 vorgesehen sein.

Alternativ kann das Verbindungsrohr 9 auch mit einer der Kühlkammern 8 fest verbunden und nur zu der in der Wabenstruktur 2.1, 2.2 benachbarten Kühlkammer 8 hin mittels einer Dichtung abgedichtet sein.

Die Kühlkörper 3.1, 3.2, 4 können aus einem anderen Material gebildet sein.

Die Kühlkörper 3.1, 3.2, 4 können an einem der Kühlkammer 8 gegenüberliegenden Ende mit einer Anschlagkante versehen sein, um ein Herausrutschen der galvanischen Zellen in axialer Richtung zu vermeiden.

### Bezugszeichenliste

- 1: Batteriehalter
- 2.1, 2.2: Wabenstruktur
- 3.1, 3.2: Grundkühlkörper
- 4: Zwischenkühlkörper
- 5.1 bis 5.5: Zellenebene
- 6.: Kühlmittelzulauf
- 7: Kühlmittelablauf
- 8: Kühlkammer
- 9: Verbindungsrohr
- K: Kühlmedium

## Patentansprüche

1. Batteriehalter (1) für galvanische Zellen, bei dem mindestens eine erste Wabenstruktur (2.1 bis 2.n), umfassend einen unteren Grundkühlkörper (3.1) und einen oberen Grundkühlkörper (3.2) und mindestens einen Zwischenkühlkörper (4), vorgesehen ist, wobei jeweils zwischen einem der Grundkühlkörper (3.1, 3.2) und einem der Zwischenkühlkörper (4) und/oder zwischen zweien der Zwischenkühlkörper (4) galvanische Zellen nebeneinander in einer Zellenebene (5.1 bis 5.n) anordenbar sind, wobei die galvanischen Zellen einer der Zellenebenen (5.1 bis 5.n) zu den galvanischen Zellen mindestens einer benachbarten Zellenebene (5.1 bis 5.n) um die halbe Breite einer galvanischen Zelle so seitlich verschoben sind, dass sich eine wabenartige Anordnung der galvanischen Zellen ergibt und wobei der Zwischenkühlkörper (4) und die Grundkühlkörper (3.1, 3.2) in einem Bereich zwischen den galvanischen Zellen entsprechend den Außenkonturen der galvanischen Zellen gebildet sind und wobei jeder der Kühlkörper (3.1, 3.2, 4) zumindest an einem in einer Axialrichtung der galvanischen Zellen gelegenen Ende eine Kühlkammer (8) aufweist, die von einem Kühlmedium (K) durchströmbar ist, in die das Kühlmedium (K) zumindest aus einer Kühlkammer (K) mindestens eines benachbarten Kühlkörpers (3.1, 3.2, 4) einströmbar und/oder aus der das Kühlmedium (K) zumindest in eine Kühlkammer (8) mindestens eines der benachbarten Kühlkörper (3.1, 3.2, 4) ausströmbar ist, wobei mindestens eine Kühlkammer (8) mindestens eines der Kühlkörper (3.1, 3.2, 4) aus mindestens einer der Wabenstrukturen (2.1 bis 2.n) einen Kühlmittelzulauf (6) und/oder einen Kühlmittelablauf (7) zur Zuführung und/oder Abführung des Kühlmediums (K) aufweist, wobei mindestens zwei Wabenstrukturen (2.1 bis 2.n) so hintereinander angeordnet sind, dass jede der Kühlkammern (8) mindestens einer der Wabenstrukturen (2.1 bis 2.n) an eine benachbarte Kühlkammer (8) einer der anderen Wabenstrukturen (2.1 bis 2.n) angrenzt, **dadurch gekennzeichnet, dass** die Kühlkammern (8) jeweils zweier in einer der Wabenstrukturen (2.1 bis 2.n) benachbarter Kühlkörper (3.1, 3.2, 4) mit Verbindungsrohren (9) verbindbar sind.

2. Batteriehalter (1) nach Anspruch 1, **dadurch gekennzeichnet, dass** das Kühlmedium (K) zwischen mindestens einer der Kühlkammern (8) mindestens einer der Wabenstrukturen (2.1 bis 2.n) und der benachbarten Kühlkammer (8) der benachbarten Wabenstruktur (2.1 bis 2.n) strömbar ist.

3. Batteriehalter (1) nach einem der Ansprüche 1 oder 2, **dadurch gekennzeichnet, dass** jeweils eine der Kühlkammern (8) einer Wabenstruktur (2.1 bis 2.n) mit der benachbarten Kühlkammer (8) der benachbarten Wabenstruktur (2.1 bis 2.n) unlösbar und bezüglich des Kühlmediums (K) dicht verbunden ist.

4. Batteriehalter (1) nach einem der Ansprüche 1 bis 3, **dadurch gekennzeichnet, dass** mindestens eines der Verbindungsrohre (9) zu jeder der von ihm verbundenen Kühlkammern (8) hin mittels jeweils einer Dichtung abgedichtet ist.

5. Batteriehalter (1) nach Anspruch 4, **dadurch gekennzeichnet, dass** mindestens eines der Verbindungsrohre (9) zu einer der von ihm verbundenen Kühlkammern (8) hin mittels einer Dichtung abgedichtet und in der anderen der von ihm verbundenen Kühlkammern (8) fest angeordnet ist.

6. Batteriehalter (1) nach einem der Ansprüche 1 bis 5, **dadurch gekennzeichnet, dass** mindestens eines der Verbindungsrohre (9) so gestaltet ist, dass sich ein vorgegebener Mindestabstand zwischen den Kühlkörpern (3.1, 3.2, 4) der von ihm verbundenen Kühlkammern (8) mit einem vorgegebenen Spalt zum Entweichen von Gasen ergibt.

7. Batteriehalter (1) nach einem der vorhergehenden Ansprüche, **dadurch gekennzeichnet, dass** jede der Kühlkammern (8) so gebildet ist, dass das Kühlmedium (K) innerhalb mindestens einer der Wabenstrukturen (2.1 bis 2.n) in nur einem Kreislauf vom Kühlmittelzulauf (6) zum Kühlmittelablauf (7) strömbar ist.

8. Batteriehalter (1) nach einem der vorhergehenden Ansprüche, **dadurch gekennzeichnet, dass** die Kühlkörper (3.1, 3.2, 4) aus Aluminium gebildet sind.

9. Batteriehalter (1) nach einem der vorhergehenden Ansprüche, **dadurch gekennzeichnet, dass** die Kühlkörper (3.1, 3.2, 4) an einem der Kühlkammer (8) gegenüberliegenden Ende eine Anschlagkante aufweisen.

## Claims

1. A battery holder (1) for galvanic cells, where at least one first honeycomb structure (2.1 to 2.n) comprising a lower basic heat sink (3.1) and an upper basic heat sink (3.2) and at least one intermediate heat sink (4) is provided, wherein galvanic cells can be arranged next to each other at a cell level (5.1 to 5.n) either between one of the basic heat sinks (3.1, 3.2) and one of the intermediate heat sinks (4) and/or between two of the intermediate heat sinks (4), wherein the galvanic cells of one of the cell levels (5.1 to 5.n) are offset to the side relative to the galvanic cells of at least one adjacent cell level (5.1 to 5.n) by half the width of a galvanic cell, in such a manner that the result is a honeycomb-like arrangement of the galvanic cells, and wherein the intermediate heat sink (4) and the basic heat sink (3.1, 3.2) are formed in a space between the galvanic cells defined by the outer contours of the galvanic cells, and wherein each of the heat sinks (3.1, 3.2, 4) includes a cooling chamber (8) at least at an end located in an axial direction of the galvanic cells, through which cooling chamber a cooling medium (K) can flow, the cooling medium (K) being able to flow into said cooling chamber from at least one cooling chamber (K) of at least one adjacent heat sink (3.1, 3.2, 4) and/or the cooling medium (K) being able to flow out of said cooling chamber into at least one cooling chamber (8) of at least one of the adjacent heat sinks (3.1, 3.2, 4), wherein at least one cooling chamber (8) of at least one of the heat sinks (3.1, 3.2, 4) from at least one of the honeycomb structures (2.1 to 2.n) includes a coolant inlet (6) and/or a coolant outlet (7) for supplying and/or removing the cooling medium (K), wherein at least two honeycomb structures (2.1 to 2.n) are arranged one behind the other in such a manner that each of the cooling chambers (8) of at least one of the honeycomb structures (2.1 to 2.n) adjoins an adjacent cooling chamber (8) of one of the other honeycomb structures (2.1 to 2.n), **characterized in that** the cooling chambers (8) of any two heat sinks (3.1, 3.2, 4) that are adjacent to each other in one of the honeycomb structures (2.1 to 2.n) can be connected by means of connecting pipes (9).

2. The battery holder (1) according to claim 1, **characterized in that** the cooling medium (K) is able to flow between at least one of the cooling chambers (8) of at least one of the honeycomb structures (2.1 to 2.n) and the adjacent cooling chamber (8) of the adjacent honeycomb structure (2.1 to 2.n).

3. The battery holder (1) according to either of claims 1 or 2, **characterized in that** any one of the cooling chambers (8) of a honeycomb structure (2.1 to 2.n) is permanently connected to and, with regard to the cooling medium (K), tightly sealed to the adjacent cooling chamber (8) of the adjacent honeycomb structure (2.1 to 2.n).

4. The battery holder (1) according to any one of claims 1 to 3, **characterized in that** at least one of the connecting pipes (9) is sealed by means of a seal towards each of the cooling chambers (8) it connects.

5. The battery holder (1) according to claim 4, **characterized in that** at least one of the connecting pipes (9) is sealed by means of a seal towards one of the cooling chambers (8) it connects and is fixedly arranged in the other one of the cooling chambers (8) it connects.

6. The battery holder (1) according to any one of claims 1 to 5, **characterized in that** at least one of the connecting pipes (9) is designed in such a manner that a defined minimum distance is provided between the heat sinks (3.1, 3.2, 4) of the cooling chambers (8) it connects, including a defined gap where gases can escape.

7. The battery holder (1) according to any one of the preceding claims, **characterized in that** each of the cooling chambers (8) is formed in such a manner that the cooling medium (K) can flow from the coolant inlet (6) to the coolant outlet (7) along one path only within at least one of the honeycomb structures (2.1 to 2.n).

8. The battery holder (1) according to any one of the preceding claims, **characterized in that** the heat sinks (3.1, 3.2, 4) are formed of aluminium.

9. The battery holder (1) according to any one of the preceding claims, **characterized in that** the heat sinks (3.1 3.2, 4) include a stop edge at an end located opposite the cooling chamber (8).

## Revendications

1. Support de batterie (1) pour des cellules galvaniques, pour lequel il est prévu au moins une première structure en nid d'abeilles (2.1 à 2.n), comprenant un dissipateur thermique de base (3.1) inférieur et un dissipateur thermique de base (3.2) supérieur et au moins un dissipateur thermique intermédiaire (4), des cellules galvaniques pouvant être disposées de façon juxtaposée dans un plan de cellules (5.1 à 5.n) respectivement entre un des dissipateurs thermiques de base (3.1, 3.2) et un des dissipateurs thermiques intermédiaires (4) et/ou entre deux des dissipateurs thermiques intermédiaires (4), les cellules galvaniques d'un des plans de cellules (5.1 à 5.n) des cellules galvaniques d'au moins un plan de cellules (5.1 à 5.n) voisin étant poussées latéralement sur la demi-largeur d'un cellule galvanique de telle façon qu'il en résulte un agencement du type en nid d'abeilles des cellules galvaniques, et de telle façon que le dissipateur thermique intermédiaire (4) et les dissipateurs thermiques de base (3.1, 3.2) sont formés dans une zone entre les cellules galvaniques selon les contours extérieurs des cellules galvaniques, et chacun des dissipateurs thermiques (3.1, 3.2, 4) présentant, au moins à une extrémité placée dans une direction axiale des cellules galvaniques, une chambre de refroidissement (8) qui peut être parcourue par un fluide de refroidissement (K) et dans laquelle le fluide de refroidissement (K) peut être introduit au moins à partir d'une chambre de refroidissement (K) d'au moins un dissipateur thermique (3.1, 3.2, 4) voisin et/ou à partir de laquelle le fluide de refroidissement (K) peut être évacué au moins dans une chambre de refroidissement (8) d'au moins un des dissipateurs thermiques (3.1, 3.2, 4) voisins, au moins une chambre de refroidissement (8) d'au moins un des dissipateurs thermiques (3.1, 3.2, 4) présentant, à partir d'au moins une des structures en nid d'abeilles (2.1 à 2.n), une arrivée de réfrigérant (6) et/ou une sortie de réfrigérant (7) pour l'amenée et/ou l'évacuation du fluide de refroidissement (K), au moins deux structures en nid d'abeilles (2.1 à 2.n) étant disposées l'une derrière l'autre de telle sorte que chacune des chambres de refroidissement (8) d'au moins une des structures en nid d'abeilles (2.1 à 2.n) est attenante à une chambre de refroidissement (8) voisine d'une des autres structures en nid d'abeilles (2.1 à 2.n), **caractérisé en ce que** les chambres de refroidissement (8) de respectivement deux dissipateurs thermiques (3.1, 3.2, 4) voisins dans une des structures en nid d'abeilles (2.1 à 2.n) peuvent être raccordées à des tubes de raccordement (9).

2. Support de batterie (1) selon la revendication 1, **caractérisé en ce que** le fluide de refroidissement (K) peut s'écouler entre au moins une des chambres de refroidissement (8) d'au moins un des structures en nid d'abeilles (2.1 à 2.n) et la chambre de refroidissement (8) voisine de la structure en nid d'abeilles (2.1 à 2.n) voisine.

3. Support de batterie (1) selon une des revendications 1 ou 2, **caractérisé en ce que** respectivement une des chambres de refroidissement (8) d'une structure en nid d'abeilles (2.1 à 2.n) est raccordée de façon non détachable à la chambre de refroidissement (8) voisine de la structure en nid d'abeilles (2.1 à 2.n) voisine et de façon étanche en ce qui concerne le fluide de refroidissement (K).

4. Support de batterie (1) selon une des revendications 1 à 3, **caractérisé en ce qu'**au moins un des tubes de raccordement (9) de chacune des chambres de refroidissement (8) qui sont raccordées par lui est rendu étanche au moyen de respectivement un joint d'étanchéité.

5. Support de batterie (1) selon la revendication 4, **caractérisé en ce qu'**au moins un des tubes de raccordement (9) d'une des chambres de refroidissement (8) raccordées par lui est rendu étanche au moyen d'un joint d'étanchéité et est disposé de façon fixe dans l'autre des chambres de refroidissement (8) raccordées par lui.

6. Support de batterie (1) selon une des revendications 1 à 5, **caractérisé en ce qu'**au moins un des tubes de raccordement (9) est constitué de telle façon qu'il en résulte un écart minimal prédéfini entre les dissipateurs thermiques (3.1, 3.2, 4) des chambres de refroidissement (8) qui sont raccordées par lui, avec un interstice prédéfini pour l'échappement de gaz.

7. Support de batterie (1) selon une des revendications précédentes, **caractérisé en ce que** chacune des chambres de refroidissement (8) est formée de telle façon que le fluide de refroidissement (K) à l'intérieur d'au moins une des structures en nid d'abeilles (2.1 à 2.n) ne peut s'écouler que dans un circuit allant de l'arrivée de réfrigérant (6) vers la sortie de réfrigérant (7).

8. Support de batterie (1) selon une des revendications précédentes, **caractérisé en ce que** les dissipateurs thermiques (3.1, 3.2, 4) sont formés en aluminium.

9. Support de batterie (1) selon une des revendications précédentes, **caractérisé en ce que** les dissipateurs thermiques (3.1, 3.2, 4) présentent une arête de butée à une extrémité située en face de la chambre de refroidissement (8).
